# EUROPÄISCHE PATENTSCHRIFT

(11) **EP 4 259 486 B1**
(45) Veröffentlichungstag und Bekanntmachung des Hinweises auf die Patenterteilung: **21.01.2026**
(21) Anmeldenummer: 21810594.8
(22) Anmeldetag: 11.11.2021
(51) Int. Cl.: B60Q 1/076

(54) **EINSTELLVORRICHTUNG ZUR EINSTELLUNG VON ZUMINDEST ZWEI OPTISCH RELEVANTEN BAUEINHEITEN EINES KRAFTFAHRZEUGSCHEINWERFERS**
ADJUSTMENT DEVICE FOR ADJUSTING AT LEAST TWO OPTICALLY RELEVANT ASSEMBLY UNITS OF A MOTOR VEHICLE HEADLIGHT
DISPOSITIF DE RÉGLAGE PERMETTANT DE RÉGLER AU MOINS DEUX UNITÉS D'ASSEMBLAGE OPTIQUEMENT APPROPRIÉES D'UN PHARE DE VÉHICULE À MOTEUR

(30) Priorität: 11.12.2020 EP 20213376
(43) Veröffentlichungstag der Anmeldung: 18.10.2023
(73) Patentinhaber: ZKW Group GmbH, 3250 Wieselburg (AT)
(72) Erfinder: STEINKELLNER, Johann, 3684 St. Oswald (AT)
(74) Vertreter: Patentanwaltskanzlei Matschnig & Forsthuber OG
(86) Internationale Anmeldenummer: PCT/EP2021/081353
(87) Internationale Veröffentlichungsnummer: WO 2022/122293

(56) Entgegenhaltungen:
- EP-A1- 2 796 320
- EP-A1- 2 803 528
- EP-A1- 2 995 500
- EP-A1- 3 127 746
- WO-A1-2016/201466
- US-A1- 2019 100 129

## Beschreibung

Die Erfindung betrifft eine Einstellvorrichtung zur Einstellung von zumindest zwei optisch relevanten Baueinheiten eines Kraftfahrzeugscheinwerfers, welche Einstellvorrichtung Folgendes umfasst:
- zumindest zwei Tragerahmen, welche jeweils eingerichtet sind, zumindest eine optisch relevante Baueinheit, beispielsweise ein Lichtmodul, zu tragen,
- ein Montagebauteil, an welchem die zumindest zwei Tragerahmen jeweils um eine Horizontalachse und eine Vertikalachse - gesehen in einer korrekten Einbaulage der Einstellvorrichtung in einem Kraftfahrzeugscheinwerfer, der in ein Kraftfahrzeug eingebaut ist - verschwenkbar gelagert sind,
- eine Vertikal-Verschwenkeinrichtung zum gleichzeitigen Verschwenken der zumindest zwei Tragerahmen um deren Horizontalachsen, wobei die Vertikal-Verschwenkeinrichtung hierzu ein erstes Kopplungselement und eine erste Antriebsvorrichtung mit einem in eine erste Verschubachse linear verstellbaren Stellarm umfasst, wobei das erste Kopplungselement gelenkig mit den zumindest zwei Tragerahmen verbunden ist, und wobei der Stellarm der ersten Antriebseinrichtung an dem ersten Kopplungselement angreift und in Richtung der ersten Verschubachse antreibt, sodass bei einem Verstellen des ersten Kopplungselements in Richtung der ersten Verschubachse die zumindest zwei Tragerahmen gleichzeitig um ihre jeweiligen Horizontalachsen in gleicher Richtung verschwenkbar sind,
- eine Horizontal-Verschwenkeinrichtung zum gleichzeitigen Verschwenken der zumindest zwei Tragerahmen um deren Vertikalachsen, wobei die Horizontal-Verschwenkeinrichtung hierzu ein zweites Kopplungselement und eine zweite Antriebsvorrichtung mit einem in eine zweite Verschubachse linear verstellbaren Stellarm umfasst, wobei das zweite Kopplungselement gelenkig mit den zumindest zwei Tragerahmen verbunden ist, und wobei der Stellarm der zweiten Antriebseinrichtung an dem zweiten Kopplungselement angreift und in Richtung der zweiten Verschubachse antreibt, sodass bei einem Verstellen des zweiten Kopplungselements in Richtung der zweiten Verschubachse die zumindest zwei Tragerahmen gleichzeitig um ihre jeweiligen Vertikalachsen in gleicher Richtung verschwenkbar sind, wobei jeder Tragerahmen ein Verstelldreieck aufweist, welches jeweils durch ein Fixpunktlager und ein erstes und ein zweites Einstellpunktlager gebildet ist, wobei die Tragerahmen mittels dem jeweiligen Fixpunktlager gelenkig an dem Montagebauteil angeordnet sind, und wobei das erste Kopplungselement an den ersten Einstellpunklagern und das zweite Kopplungselement an den zweiten Einstellpunktlagern angreift, wobei bei einem Verschwenken der Tragerahmen aus einer Grundstellung durch die Vertikal-Verschwenkeinrichtung und/oder die Horizontal-Verschwenkeinrichtung die Verstelldreiecke der Tragerahmen weiterhin in zueinander parallelen Ebenen liegen.

Ferner betrifft die Erfindung eine Beleuchtungsvorrichtung mit zumindest einer erfindungsgemäßen Einstellvorrichtung, wobei die Beleuchtungsvorrichtung Lichtmodule mit jeweils einem Körperschwerpunkt umfasst, und wobei auf einem Tragerahmen jeweils ein Lichtmodul angeordnet ist, wobei der Körperschwerpunkt jedes Lichtmoduls in Einbaulage der Beleuchtungsvorrichtung über dem jeweiligen Fixpunktlager des entsprechenden Tragerahmens angeordnet ist.

Ferner betrifft die Erfindung einen Kraftfahrzeugscheinwerfer mit zumindest einer erfindungsgemäßen Beleuchtungsvorrichtung.

Einstellsysteme sind aus dem Stand der Technik bekannt und werden bei Kraftfahrzeugscheinwerfern häufig eingesetzt, um die vertikale Auslenkung (beispielsweise Leuchtweitenregulierung) oder die horizontale Auslenkung (Grundeinstellung oder beispielsweise Kurvenlicht) einer Lichtverteilung einzustellen.

Zur gesetzeskonformen Einstellung des mit einem Kraftfahrzeugscheinwerfer erzeugten Lichtbildes ist es notwendig, dass ein oder mehrere optisch relevante Baueinheiten des Scheinwerfers unter anderem in Höhenrichtung und/ oder seitlich einstellbar sind. Bei einer solchen relevanten optischen Baueinheit handelt es sich beispielsweise um ein Lichtmodul, etwa bestehend aus zumindest einer Lichtquelle, zumindest einem Reflektor, zumindest einer Linse etc.; es kann sich aber auch um einzelne Bauteile wie Reflektoren, Linsen etc. handeln, die entsprechend verstellt werden.

Dabei ist die zumindest eine optisch relevante Baueinheit häufig um eine oder mehrere Achsen, beispielsweise um eine horizontale und/ oder vertikale Achse verschwenkbar in dem Scheinwerfer gelagert. Beispielsweise sind eine oder mehrere Lichtmodule an einem Tragerahmen gelagert, und der Tragerahmen ist um eine oder zwei Achsen, wie vorstehend beschrieben, verschwenkbar gelagert.

Einstellsysteme sollen einerseits eine zuverlässige Verstellung eines relevanten Bauteils ermöglichen, andererseits soll der Platzbedarf solcher Einstellsysteme minimiert werden, um die Konzeption eines Kraftfahrzeugscheinwerfers möglichst wenig einzuschränken. Einstellvorrichtungen zur Einstellung von optisch relevanten Baueinheiten von Kraftfahrzeugscheinwerfern, wie beispielsweise Lichtquellen, Reflektoren und/oder Linsen, erlauben eine Anpassung des durch den Scheinwerfer erzeugten Lichtbildes an vorgegebene Anforderungen. Dies erlaubt es, dass Abweichungen von Sollvorgaben, die beispielsweise nach einem Einbauvorgang des Scheinwerfers in ein Kraftfahrzeug festgestellt werden, nachträglich durch Verwendung einer Einstellvorrichtung ausgeglichen werden können. Eine typische Aufgabe von Einstellvorrichtungen liegt in der Anpassung der Leuchtweite eines Scheinwerfers, wobei dieses technische Gebiet insbesondere unter dem Ausdruck "Leuchtweitenregulierung" - kurz LWR genannt - bekannt geworden ist.

Zur Verstellung ist in der Regel zumindest eine Antriebseinrichtung vorgesehen, wobei die Antriebseinrichtung üblicherweise manuell betätigbar ist. Beispielsweise umfasst die Antriebseinrichtung ein Drehrad bzw. eine Einstellschraube, deren Drehbewegung über eine geeignete Mechanik in eine Linearbewegung eines Gleitelements umgesetzt wird, welches in entsprechenden Gleitbahnen in dem Scheinwerfergehäuse verschiebbar geführt ist. Ein Verstellpunkt der optisch relevanten Baueinheit, z.B. des Tragerahmens, an welchem die Baueinheit angebracht ist, ist in dem Gleitelement gelagert, sodass bei einem Verschieben des Gleitelements die Baueinheit bzw. der Tragerahmen verschwenkt werden.

Die EP 2 803 528 A1, die US 2019/100129 A1 und die WO 2016/201466 A1 zeigen Einstellvorrichtungen für Kraftfahrzeugscheinwerfer aus dem Stand der Technik.

Es ist eine Aufgabe der Erfindung eine verbesserte Einstellvorrichtung bereitzustellen.

Diese Aufgabe wird dadurch gelöst, dass das Verstelldreieck jedes Tragerahmens in der Grundstellung der Tragerahmen in einer Horizontalebene angeordnet ist, und dass das erste und/ oder das zweite Kopplungselement gleitend geführt an dem Montagebauteil angeordnet sind.

Dadurch kann der Bauraumbedarf gegenüber bisher bekannten Lösungen verringert werden bzw. variabler gestaltet werden. Dies ist insbesondere bei aktuellen Scheinwerfern von Vorteil, da durch immer höhere Anforderungen von Seiten des Fahrzeugdesigns, umgebender Technik und Funktionen sowie zusätzlicher Technik im Scheinwerfer der vorhandene Bauraum immer besser genutzt werden muss.

Es sei angemerkt, dass sich Begriffe wie "horizontal", "Horizontalebene", "vertikal", "orthogonal", "oben" oder "unten" auf eine in einen Kraftfahrzeugscheinwerfer korrekt bzw. ordnungsgemäße eingebaute Einstellvorrichtung bzw. Beleuchtungseinrichtung beziehen, welcher Kraftfahrzeugscheinwerfer sich in Einbaulage in einem Kraftfahrzeug befindet.

Es sei angemerkt, dass die Vertikalachsen der Tragerahmen in der Grundstellung der Tragerahmen und in Einbaulage der Einstellvorrichtung vertikal angeordnet sind, wobei bei einem Verstellen bzw. Verschwenken der Tragerahmen um die jeweiligen Horizontalachsen die Vertikalachsen der Tragerahmen nicht mehr genau vertikal stehen und ihre Ausrichtung verändert haben, wobei in diesem Zusammenhang weiterhin von Vertikalachsen der Tragerahmen gesprochen wird. Ferner sei angemerkt, dass die Vertikalachsen jeweils immer orthogonal auf das Verstelldreieck des entsprechenden Tragerahmens sind unabhängig von der Verstellung der Tragerahmen selbst.

Es kann vorgesehen sein, dass die erste Verschubachse orthogonal zu der jeweiligen Horizontalebene der Verstelldreiecke der Tragerahmen in der Grundstellung angeordnet ist, und wobei die zweite Verschubachse orthogonal zur ersten Verschubachse angeordnet ist.

Es kann vorgesehen sein, dass die zumindest zwei Tragerahmen mit jeweils einem Fixpunktlager an dem Montagebauteil gelagert sind, wobei das Fixpunktlager als Kugelgelenk ausgebildet ist.

Es kann vorgesehen sein, dass die erste Verschubachse eine vertikal stehende Achse ist.

Es kann vorgesehen sein, dass die zweite Verschubachse eine horizontal liegende Achse ist.

Es kann vorgesehen sein, dass das Montagbauteil als Kraftfahrzeugscheinwerfergehäuse ausgebildet ist.

Es kann vorgesehen sein, dass das erste und das zweite Kopplungselement als starre Körper ausgebildet sind.

Es kann vorgesehen sein, dass die zumindest zwei Tragerahmen baugleich ausgebildet sind.

Es kann vorgesehen sein, dass die Verstelldreiecke der zumindest zwei Tragerahmen in unterschiedlichen Horizontalebenen angeordnet sind.

Es kann vorgesehen sein, dass die erste und die zweite Antriebsvorrichtung als Stellmotoren ausgebildet sind.

Es kann vorgesehen sein, dass die Einstellvorrichtung genau zwei Tragerahmen umfasst.

Die Aufgabe wird ebenso gelöst durch eine Beleuchtungsvorrichtung mit zumindest einer erfindungsgemäßen Einstellvorrichtung, wobei die Beleuchtungsvorrichtung Lichtmodule mit jeweils einem Körperschwerpunkt umfasst, und wobei auf einem Tragerahmen jeweils ein Lichtmodul angeordnet ist, wobei der Körperschwerpunkt jedes Lichtmoduls in Einbaulage der Beleuchtungsvorrichtung über dem jeweiligen Fixpunktlager des entsprechenden Tragerahmens angeordnet ist.

Dadurch liegt der Tragerahmen aufgrund seines Eigengewichts derart auf dem Fixpunktlager bzw. der Einstellvorrichtung auf, dass kein Spiel in dem System vorhanden ist bzw. die jeweiligen "Aktuatoren" der Einstellvorrichtung vorbelastet sind. Dadurch können Toleranzketten innerhalb des Systems verkleinert bzw. verringert werden, sodass die Einstellvorrichtung insgesamt genauer ist bzw. die zumindest eine optisch relevante Baueinheit feiner justierbar ist.

Die Aufgabe wird ebenso gelöst durch einen Kraftfahrzeugscheinwerfer mit zumindest einer erfindungsgemäßen Beleuchtungsvorrichtung.

Nachfolgend wird die Erfindung anhand von beispielhaften Zeichnungen näher erläutert. Hierbei zeigt
Fig. 1 eine perspektivische Ansicht von schräg oben einer beispielhaften Einstellvorrichtung, und
Fig. 2 eine perspektivische Ansicht der beispielhaften Einstellvorrichtung aus Fig. 1 von schräg unten.

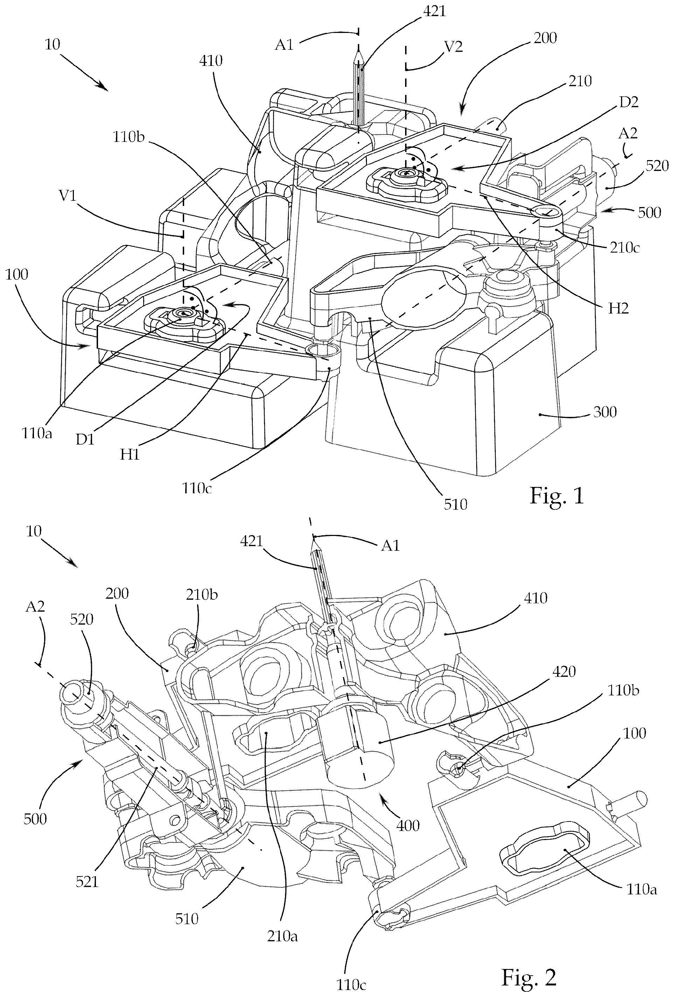

**Fig. 1** zeigt eine beispielhafte Einstellvorrichtung **10** zur Einstellung von zumindest zwei optisch relevanten Baueinheiten eines Kraftfahrzeugscheinwerfers, welche Einstellvorrichtung **10** zwei im Wesentlichen baugleiche Tragerahmen **100, 200** umfasst, welche jeweils eingerichtet sind, zumindest eine optisch relevante Baueinheit, beispielsweise ein Lichtmodul, zu tragen. Die optisch relevanten Baueinheiten bzw. Lichtmodule zur besseren Übersichtlichkeit nicht in den Figuren eingezeichnet.

Ferner umfasst die Einstellvorrichtung **10** ein Montagebauteil **300,** an welchem die zwei Tragerahmen **100, 200** jeweils um eine Horizontalachse **H1, H2** und eine Vertikalachse **V1,** V2 verschwenkbar gelagert sind.

Zusätzlich weist die Einstellvorrichtung **10** eine Vertikal-Verschwenkeinrichtung **400** zum gleichzeitigen Verschwenken der zwei Tragerahmen **100, 200** um deren Horizontalachsen **H1, H2** auf, wobei die Vertikal-Verschwenkeinrichtung **400** hierzu ein erstes Kopplungselement **410** und eine erste als Stellmotor ausgebildete Antriebsvorrichtung **420** mit einem in eine erste Verschubachse **A1** linear verstellbaren Stellarm **421** umfasst. Die Vertikal-Verschwenkeinrichtung **400** ist in der Rückansicht der Einstellvorrichtung **10** in **Fig. 2** besser zu sehen.

Das erste Kopplungselement **410** ist dabei gelenkig mit den zwei Tragerahmen **100, 200** verbunden, wobei der Stellarm **421** der ersten Antriebseinrichtung **420** an dem ersten Kopplungselement **410** angreift und in Richtung der ersten Verschubachse **A1** antreibt, sodass bei einem Verstellen des ersten Kopplungselements **410** in Richtung der ersten Verschubachse **A1** die zwei Tragerahmen **100, 200** gleichzeitig um ihre jeweiligen Horizontalachsen **H1, H2** in gleicher Richtung verschwenkbar sind.

Weiters umfasst die Einstellvorrichtung **10** eine Horizontal-Verschwenkeinrichtung **500** zum gleichzeitigen Verschwenken der zwei Tragerahmen **100, 200** um deren Vertikalachsen **V1, V2,** wobei die Horizontal-Verschwenkeinrichtung **500** hierzu ein zweites Kopplungselement **510** und eine zweite als Stellmotor ausgebildete Antriebsvorrichtung **520** mit einem in eine zweite Verschubachse **A2** linear verstellbaren Stellarm **521** umfasst.

Das zweite Kopplungselement **510** ist dabei gelenkig mit den zwei Tragerahmen **100, 200** verbunden, wobei der Stellarm **521** der zweiten Antriebseinrichtung **520** an dem zweiten Kopplungselement **510** angreift und in Richtung der zweiten Verschubachse **A2** antreibt, sodass bei einem Verstellen des zweiten Kopplungselements **510** in Richtung der zweiten Verschubachse **A2** die zwei Tragerahmen **100, 200** gleichzeitig um ihre jeweiligen Vertikalachsen **V1, V2** in gleicher Richtung verschwenkbar sind.

Es sei angemerkt, dass sowohl das erste Kopplungselement **410** als auch das zweite Kopplungselement **510** als starre Körper ausgebildet sind, sodass eine Bewegung des entsprechenden Stellarmes **421, 521** unmittelbar durch die Kopplungselemente **410, 510** umgesetzt wird. Ferner sind die Kopplungselemente **410, 510** gleitend geführt an dem Montagbauteil **300** angeordnet.

Darüber hinaus weist jeder Tragerahmen **100, 200** ein Verstelldreieck **D1, D2** auf, welches jeweils durch ein Fixpunktlager **110a, 210a** und ein erstes und ein zweites Einstellpunktlager **110b, 210b, 110c, 210c** gebildet ist, wobei die Tragerahmen **100, 200** mittels dem jeweiligen Fixpunktlager **110a, 210a** gelenkig an dem Montagebauteil **300** angeordnet sind. Die Fixpunktlager **110a, 210a** sowie die ersten und zweiten Einstellpunktlager **110b, 210b, 110c, 210c** sind jeweils als Kugelgelenk mit den entsprechenden Koppelelementen **410, 510** und Montagebauteil **300** ausgebildet.

Das erste Kopplungselement **410** greift an den ersten Einstellpunklagern **110b, 210b** und das zweite Kopplungselement **510** greift an den zweiten Einstellpunktlagern **110c, 210c** an, wobei das Verstelldreieck **D1, D2** jedes Tragerahmens **100, 200** in einer Grundstellung der Tragerahmen **100, 200** in einer Horizontalebene angeordnet ist, wobei die Verstelldreiecke **D1, D2** in unterschiedlichen Horizontalebenen liegen, wie in **Fig. 1** zu sehen ist.

Bei einem Verschwenken der Tragerahmen **100, 200** aus der Grundstellung durch die Vertikal- Verschwenkeinrichtung **400** und/oder die Horizontal-Verschwenkeinrichtung **500** liegen die Verstelldreiecke **D1, D2** der Tragerahmen **100, 200** weiterhin in zueinander parallelen Ebenen.

Ferner ist im gezeigten Beispiel die erste Verschubachse **A1** der Vertikal-Verschwenkvorrichtung **400** orthogonal zu der jeweiligen Horizontalebene der Verstelldreiecke **D1, D2** der Tragerahmen **100, 200** in der Grundstellung angeordnet, wobei die zweite Verschubachse **A2** der Horizontal-Verschwenkeinrichtung **500** orthogonal zur ersten Verschubachse **A1** angeordnet ist, unabhängig von der Verschwenkung bzw. Verstellung der Tragerahmen **100, 200.**

Die erste Verschubachse **A1** ist dabei in ordnungsgemäßer Einbaulage der Einstellvorrichtung **10** eine vertikal stehende Achse, wobei die zweite Verschubachse **A2** in ordnungsgemäßer Einbaulage der Einstellvorrichtung **10** eine horizontal liegende Achse ist.

Wie bereits eingangs erwähnt, sind auf den Tragerahmen **100, 200** optisch relevante Bauteile, beispielsweise Lichtmodule angeordnet, welche jedoch in den Figuren nicht eingezeichnet sind. Die Lichtmodule weisen dabei jeweils einen Körperschwerpunkt auf, wobei auf einem Tragerahmen **100, 200** jeweils ein Lichtmodul angeordnet ist, und wobei der Körperschwerpunkt jedes Lichtmoduls in Einbaulage der Einstellvorrichtung über dem jeweiligen Fixpunktlager **110a, 210a** des entsprechenden Tragerahmens **100, 200** angeordnet ist.

### LISTE DER BEZUGSZEICHEN

- Einstellvorrichtung: 10
- Tragerahmen: 100, 200
- Fixpunktlager: 110a, 210a
- Erstes Einstellpunktlager: 110b, 210b
- Zweites Einstellpunktlager: 110c, 210c
- Montagebauteil: 300
- Vertikal-Verschwenkeinrichtung: 400
- Erstes Kopplungselement: 410
- Erste Antriebsvorrichtung: 420
- Stellelement: 421
- Horizontal-Verschwenkeinrichtung: 500
- Zweites Kopplungselement: 510
- Zweite Antriebsvorrichtung: 520
- Stellelement: 521
- Horizontalachsen: H1, H2
- Vertikalachsen: V1, V2
- Erste Verschubachse: A1
- Zweite Verschubachse: A2
- Verstelldreieck: D1, D2

## Patentansprüche

1. Einstellvorrichtung (10) zur Einstellung von zumindest zwei optisch relevanten Baueinheiten eines Kraftfahrzeugscheinwerfers, welche Einstellvorrichtung (10) Folgendes umfasst:
- zumindest zwei Tragerahmen (100, 200), welche jeweils eingerichtet sind, zumindest eine optisch relevante Baueinheit, beispielsweise ein Lichtmodul, zu tragen,
- ein Montagebauteil (300), an welchem die zumindest zwei Tragerahmen (100, 200) jeweils um eine Horizontalachse (H1, H2) und eine Vertikalachse (V1, V2) - gesehen in einer korrekten Einbaulage der Einstellvorrichtung in einem Kraftfahrzeugscheinwerfer, der in ein Kraftfahrzeug eingebaut ist - verschwenkbar gelagert sind,
- eine Vertikal-Verschwenkeinrichtung (400) zum gleichzeitigen Verschwenken der zumindest zwei Tragerahmen (100, 200) um deren Horizontalachsen (H1, H2), wobei die Vertikal-Verschwenkeinrichtung (400) hierzu ein erstes Kopplungselement (410) und eine erste Antriebsvorrichtung (420) mit einem in eine erste Verschubachse (A1) linear verstellbaren Stellarm (421) umfasst, wobei das erste Kopplungselement (410) gelenkig mit den zumindest zwei Tragerahmen (100, 200) verbunden ist, und wobei der Stellarm (421) der ersten Antriebseinrichtung (420) an dem ersten Kopplungselement (410) angreift und in Richtung der ersten Verschubachse (A1) antreibt, sodass bei einem Verstellen des ersten Kopplungselements (410) in Richtung der ersten Verschubachse (A1) die zumindest zwei Tragerahmen (100, 200) gleichzeitig um ihre jeweiligen Horizontalachsen (H1, H2) in gleicher Richtung verschwenkbar sind,
- eine Horizontal-Verschwenkeinrichtung (500) zum gleichzeitigen Verschwenken der zumindest zwei Tragerahmen (100, 200) um deren Vertikalachsen (V1, V2), wobei die Horizontal-Verschwenkeinrichtung (500) hierzu ein zweites Kopplungselement (510) und eine zweite Antriebsvorrichtung (520) mit einem in eine zweite Verschubachse (A2) linear verstellbaren Stellarm (521) umfasst, wobei das zweite Kopplungselement (510) gelenkig mit den zumindest zwei Tragerahmen (100, 200) verbunden ist, und wobei der Stellarm (521) der zweiten Antriebseinrichtung (520) an dem zweiten Kopplungselement (510) angreift und in Richtung der zweiten Verschubachse (A2) antreibt, sodass bei einem Verstellen des zweiten Kopplungselements (510) in Richtung der zweiten Verschubachse (A2) die zumindest zwei Tragerahmen (100, 200) gleichzeitig um ihre jeweiligen Vertikalachsen (V1, V2) in gleicher Richtung verschwenkbar sind,
wobei jeder Tragerahmen (100, 200) ein Verstelldreieck (D1, D2) aufweist, welches jeweils durch ein Fixpunktlager (110a, 210a) und ein erstes und ein zweites Einstellpunktlager (110b, 210b, 110c, 210c) gebildet ist, wobei die Tragerahmen (100, 200) mittels dem jeweiligen Fixpunktlager (110a, 210a) gelenkig an dem Montagebauteil (300) angeordnet sind, und wobei das erste Kopplungselement (410) an den ersten Einstellpunklagern (110b, 210b) und das zweite Kopplungselement (510) an den zweiten Einstellpunktlagern (110c, 210c) angreift, wobei bei einem Verschwenken der Tragerahmen (100, 200) aus einer Grundstellung durch die Vertikal-Verschwenkeinrichtung (400) und/oder die Horizontal-Verschwenkeinrichtung (500) die Verstelldreiecke der Tragerahmen (100, 200) weiterhin in zueinander parallelen Ebenen liegen,
**dadurch gekennzeichnet, dass**
das Verstelldreieck (D1, D2) jedes Tragerahmens (100, 200) in der eier Grundstellung der Tragerahmen (100, 200) in einer Horizontalebene angeordnet ist, und
dass das erste und/oder das zweite Kopplungselement (410, 510) gleitend geführt an dem Montagebauteil (300) angeordnet sind.

2. Einstellvorrichtung nach Anspruch 1, **dadurch gekennzeichnet, dass** die erste Verschubachse (A1) orthogonal zu der jeweiligen Horizontalebene der Verstelldreiecke (D1, D2) der Tragerahmen (100, 200) in der Grundstellung angeordnet ist, und wobei die zweite Verschubachse (A2) orthogonal zur ersten Verschubachse (A1) angeordnet ist.

3. Einstellvorrichtung nach Anspruch 1 oder 2, **dadurch gekennzeichnet, dass** die Fixpunktlager (110a, 210a) als Kugelgelenk ausgebildet sind.

4. Einstellvorrichtung nach einem der Ansprüche 1 bis 3, **dadurch gekennzeichnet, dass** die erste Verschubachse (A1) in Einbaulage der Einstellvorrichtung (10) eine vertikal stehende Achse ist.

5. Einstellvorrichtung nach einem der Ansprüche 1 bis 4, **dadurch gekennzeichnet, dass** die zweite Verschubachse (A2) in Einbaulage der Einstellvorrichtung (10) eine horizontal liegende Achse ist.

6. Einstellvorrichtung nach einem der Ansprüche 1 bis 5, **dadurch gekennzeichnet, dass** das Montagbauteil (300) als Kraftfahrzeugscheinwerfergehäuse ausgebildet ist.

7. Einstellvorrichtung nach einem der Ansprüche 1 bis 6, **dadurch gekennzeichnet, dass** das erste und das zweite Kopplungselement (410, 510) als starre Körper ausgebildet sind.

8. Einstellvorrichtung nach einem der Ansprüche 1 bis 7, **dadurch gekennzeichnet, dass** die zumindest zwei Tragerahmen (100, 200) baugleich ausgebildet sind.

9. Einstellvorrichtung nach einem der Ansprüche 1 bis 8, **dadurch gekennzeichnet, dass** die Verstelldreiecke (D1, D2) der zumindest zwei Tragerahmen (100, 200) in der Grundstellung in unterschiedlichen Horizontalebenen angeordnet sind.

10. Einstellvorrichtung nach einem der Ansprüche 1 bis 9, **dadurch gekennzeichnet, dass** die erste und die zweite Antriebsvorrichtung (420, 520) als Stellmotoren ausgebildet sind.

11. Einstellvorrichtung nach einem der Ansprüche 1 bis 10, **dadurch gekennzeichnet, dass** die Einstellvorrichtung genau zwei Tragerahmen (100, 200) umfasst.

12. Beleuchtungsvorrichtung mit zumindest einer Einstellvorrichtung (10) nach einem der Ansprüche 1 bis 11, wobei die Beleuchtungsvorrichtung Lichtmodule mit jeweils einem Körperschwerpunkt umfasst, und wobei auf einem Tragerahmen (100, 200) jeweils ein Lichtmodul angeordnet ist, wobei der Körperschwerpunkt jedes Lichtmoduls in Einbaulage der Beleuchtungsvorrichtung in einem Kraftfahrzeug über dem jeweiligen Fixpunktlager (110a, 210a) des entsprechenden Tragerahmens (100, 200) angeordnet ist.

13. Kraftfahrzeugscheinwerfer mit zumindest einer Beleuchtungsvorrichtung nach Anspruch 12.

## Claims

1. Adjustment device (10) for adjusting at least two optically relevant components of a motor vehicle headlight, which adjustment device (10) comprises the following:
- at least two support frames (100, 200), each of which is designed to support at least one optically relevant component, for example a light module,
- a mounting component (300) on which the at least two support frames (100, 200) can each be rotated about a horizontal axis (H1, H2) and a vertical axis (V1, V2) - as seen in a correct installation position of the adjustment device in a motor vehicle headlight installed in a motor vehicle,
- a vertical pivoting device (400) for simultaneously pivoting the at least two support frames (100, 200) about their horizontal axes (H1, H2), wherein the vertical pivoting device (400) comprises a first coupling element (410) and a first drive device (420) with an actuating arm (421) that is linearly adjustable in a first displacement axis (A1), wherein the first coupling element (410) is connected in an articulated manner to the at least two support frames (100, 200), and wherein the actuating arm (421) of the first drive device (420) engages the first coupling element (410) and drives it in the direction of the first displacement axis (A1), so that when the first coupling element (410) in the direction of the first displacement axis (A1), the at least two support frames (100, 200) can be pivoted simultaneously about their respective horizontal axes (H1, H2) in the same direction,
- a horizontal pivoting device (500) for simultaneously pivoting the at least two support frames (100, 200) about their vertical axes (V1, V2), wherein the horizontal pivoting device (500) comprises a second coupling element (510) and a second drive device (520) with an actuating arm (521) that is linearly adjustable in a second displacement axis (A2) (521) that is linearly adjustable in a second displacement axis (A2), wherein the second coupling element (510) is connected in an articulated manner to the at least two support frames (100, 200), and wherein the actuating arm (521) of the second drive device (520) engages with the second coupling element (510) and drives it in the direction of the second displacement axis (A2), so that when the second coupling element (510) is adjusted in the direction of the second displacement axis (A2), the at least two support frames (100, 200) simultaneously pivot about their respective vertical axes (V1, V2) in the same direction,
wherein
each support frame (100, 200) has an adjustment triangle (D1, D2), which is formed by a fixed point bearing (110a, 210a) and a first and a second adjustment point bearing (110b, 210b, 110c, 210c), wherein the support frames (100, 200) are arranged in an articulated manner on the mounting component (300) by means of the respective fixed point bearing (110a, 210a), and wherein the first coupling element (410) engages the first adjustment point bearings (110b, 210b) and the second coupling element (510) engages with the second adjustment point bearings (110c, 210c), wherein, when the support frames (100, 200) are pivoted from a basic position by the vertical pivoting device (400) and/or the horizontal pivoting device (500), the adjustment triangles of the support frames (100, 200) continue to lie in planes parallel to each other,
**characterized in that**
the adjustment triangle (D1, D2) of each support frame (100, 200) is arranged in a horizontal plane in the basic position of the support frames (100, 200), and
that the first and/or second coupling elements (410, 510) are arranged in a sliding manner on the mounting component (300).

2. Adjustment device according to claim 1, **characterized in that** the first displacement axis (A1) is arranged orthogonally to the respective horizontal plane of the adjustment triangles (D1, D2) of the support frames (100, 200) in the basic position, and wherein the second displacement axis (A2) is arranged orthogonally to the first displacement axis (A1).

3. Adjustment device according to claim 1 or 2, **characterized in that** the fixed point bearings (110a, 210a) are designed as ball joints.

4. Adjustment device according to one of claims 1 to 3, **characterized in that** the first displacement axis (A1) is a vertically standing axis in the installation position of the adjustment device (10).

5. Adjustment device according to one of claims 1 to 4, **characterized in that** the second displacement axis (A2) is a horizontal axis in the installed position of the adjustment device (10).

6. Adjustment device according to one of claims 1 to 5, **characterized in that** the mounting component (300) is designed as a motor vehicle headlight housing.

7. Adjustment device according to one of claims 1 to 6, **characterized in that** the first and second coupling elements (410, 510) are designed as rigid bodies.

8. Adjustment device according to one of claims 1 to 7, **characterized in that** the at least two support frames (100, 200) are designed identically.

9. Adjustment device according to one of claims 1 to 8, **characterized in that** the adjustment triangles (D1, D2) of the at least two support frames (100, 200) are arranged in different horizontal planes in the basic position.

10. Adjustment device according to one of claims 1 to 9, **characterized in that** the first and second drive devices (420, 520) are designed as servomotors.

11. Adjustment device according to one of claims 1 to 10, **characterized in that** the adjustment device comprises exactly two support frames (100, 200).

12. Lighting device with at least one adjustment device (10) according to one of claims 1 to 11, wherein the lighting device comprises light modules, each with a center of gravity, and wherein one light module is arranged on each support frame (100, 200), wherein the center of gravity of each light module is arranged above the respective fixed point bearing (110a, 210a) of the corresponding support frame (100, 200) when the lighting device is installed in a motor vehicle.

13. Motor vehicle headlamp with at least one lighting device according to claim 12.

## Revendications

1. Dispositif de réglage (10) pour régler au moins deux unités structurelles optiquement pertinentes d'un phare de véhicule automobile, lequel dispositif de réglage (10) comprend :
- au moins deux cadres de support (100, 200) qui sont chacun conçus pour supporter au moins un élément optique pertinent, par exemple un module d'éclairage,
- un élément de montage (300) sur lequel les au moins deux cadres de support (100, 200) sont chacun montés de manière à pouvoir pivoter autour d'un axe horizontal (H1, H2) et autour d'un axe vertical (V1, V2) - vu dans une position de montage correcte du dispositif de réglage dans un phare de véhicule automobile monté dans un véhicule automobile -
- un dispositif de pivotement vertical (400) pour faire pivoter simultanément les au moins deux cadres porteurs (100, 200) autour de leurs axes horizontaux (H1, H2), le dispositif de pivotement vertical (400) comprenant à cet effet un premier élément d'accouplement (410) et un premier dispositif d'entraînement (420) avec un bras de réglage (421) réglable linéairement dans un premier axe de déplacement (A1), le premier élément d'accouplement (410) est relié de manière articulée aux au moins deux cadres porteurs (100, 200), et le bras de réglage (421) du premier dispositif d'entraînement (420) s'engageant sur le premier élément d'accouplement (410) et l'entraînant dans la direction du premier axe de déplacement (A1), de sorte que, lors d'un déplacement du premier élément d'accouplement (410) dans la direction du premier axe de déplacement (A1), les au moins deux cadres porteurs (100, 200) peuvent pivoter simultanément autour de leurs axes horizontaux respectifs (H1, H2) dans la même direction,
- un dispositif de pivotement horizontal (500) pour faire pivoter simultanément les au moins deux cadres porteurs (100, 200) autour de leurs axes verticaux (V1, V2), le dispositif de pivotement horizontal (500) comprenant à cet effet un deuxième élément d'accouplement (510) et un deuxième dispositif d'entraînement (520) avec un bras de réglage (521) réglable linéairement dans un deuxième axe de déplacement (A2) (521) réglable linéairement dans un deuxième axe de déplacement (A2), le deuxième élément d'accouplement (510) étant relié de manière articulée aux au moins deux cadres porteurs (100, 200), et le bras de réglage (521) du deuxième dispositif d'entraînement (520) agit sur le deuxième élément d'accouplement (510) et entraîne celui-ci dans la direction du deuxième axe de déplacement (A2), de sorte que, lors d'un déplacement du deuxième élément d'accouplement (510) dans la direction du deuxième axe de déplacement (A2), les au moins deux cadres porteurs (100, 200) pivotent simultanément autour de leurs axes verticaux respectifs (V1, V2) dans la même direction,
chaque
cadre porteur (100, 200) comportant un triangle de réglage (D1, D2) qui est formé respectivement par un palier à point fixe (110a, 210a) et un premier et un deuxième paliers à point de réglage (110b, 210b, 110c, 210c), les cadres porteurs (100, 200) étant disposés de manière articulée sur l'élément de montage (300) au moyen du palier à point fixe respectif (110a, 210a), et le premier élément d'accouplement (410) s'engageant sur les premiers paliers à point de réglage (110b, 210b) et le deuxième élément d'accouplement (510) s'engage sur les deuxièmes paliers de point de réglage (110c, 210c), le pivotement des cadres porteurs (100, 200) à partir d'une position de base par le dispositif de pivotement vertical (400) et/ou le dispositif de pivotement horizontal (500), les triangles de réglage des cadres porteurs (100, 200) restent dans des plans parallèles les uns aux autres,
**caractérisé en ce que**
le triangle de réglage (D1, D2) de chaque cadre porteur (100, 200) est disposé dans un plan horizontal dans la position de base des cadres porteurs (100, 200), et
**en ce que** le premier et/ou le deuxième élément d'accouplement (410, 510) sont disposés de manière coulissante sur l'élément de montage (300).

2. Dispositif de réglage selon la revendication 1, **caractérisé en ce que** le premier axe de déplacement (A1) est disposé orthogonalement au plan horizontal respectif des triangles de réglage (D1, D2) des cadres porteurs (100, 200) dans la position de base, et le deuxième axe de déplacement (A2) est disposé orthogonalement au premier axe de déplacement (A1).

3. Dispositif de réglage selon la revendication 1 ou 2, **caractérisé en ce que** les paliers fixes (110a, 210a) sont conçus comme des articulations à rotule.

4. Dispositif de réglage selon l'une des revendications 1 à 3, **caractérisé en ce que** le premier axe de déplacement (A1) est un axe vertical dans la position de montage du dispositif de réglage (10).

5. Dispositif de réglage selon l'une des revendications 1 à 4, **caractérisé en ce que** le deuxième axe de déplacement (A2) est un axe horizontal dans la position de montage du dispositif de réglage (10).

6. Dispositif de réglage selon l'une des revendications 1 à 5, **caractérisé en ce que** l'élément de montage (300) est conçu comme un boîtier de phare de véhicule automobile.

7. Dispositif de réglage selon l'une des revendications 1 à 6, **caractérisé en ce que** le premier et le deuxième éléments d'accouplement (410, 510) sont conçus comme des corps rigides.

8. Dispositif de réglage selon l'une des revendications 1 à 7, **caractérisé en ce que** les au moins deux cadres de support (100, 200) sont conçus de manière identique.

9. Dispositif de réglage selon l'une des revendications 1 à 8, **caractérisé en ce que** les triangles de réglage (D1, D2) des au moins deux cadres porteurs (100, 200) sont disposés dans la position de base dans des plans horizontaux différents.

10. Dispositif de réglage selon l'une des revendications 1 à 9, **caractérisé en ce que** le premier et le deuxième dispositifs d'entraînement (420, 520) sont conçus comme des servomoteurs.

11. Dispositif de réglage selon l'une des revendications 1 à 10, **caractérisé en ce que** le dispositif de réglage comprend exactement deux cadres porteurs (100, 200).

12. Dispositif d'éclairage comprenant au moins un dispositif de réglage (10) selon l'une des revendications 1 à 11, le dispositif d'éclairage comprenant des modules d'éclairage ayant chacun un centre de gravité, et dans lequel un module d'éclairage est disposé sur chaque cadre de support (100, 200), le centre de gravité de chaque module d'éclairage étant disposé, dans la position de montage du dispositif d'éclairage dans un véhicule automobile, au-dessus du palier de point fixe (110a, 210a) correspondant du cadre de support (100, 200) correspondant.

13. Projecteur de véhicule automobile comprenant au moins un dispositif d'éclairage selon la revendication 12.
